# EUROPÄISCHE PATENTSCHRIFT

(11) **EP 2 113 873 B1**
(45) Veröffentlichungstag und Bekanntmachung des Hinweises auf die Patenterteilung: **01.04.2015**
(21) Anmeldenummer: 09152253.2
(22) Anmeldetag: 06.02.2009
(51) Int. Cl.: G06Q 10/00, G06K 19/077

(54) **Gesicherter Zugriff auf personenbezogene Smartcard**
Secure access to personal smartcard
Accès protégée sur cartes à puce relatives aux personnes

(30) Priorität: 30.04.2008 DE 102008021797
(43) Veröffentlichungstag der Anmeldung: 04.11.2009
(73) Patentinhaber: TeraTron GmbH, 51647 Gummersbach (DE)
(72) Erfinder: Weiss, Bernd, 51645 Gummersbach (DE)
(74) Vertreter: Cohausz & Florack

(56) Entgegenhaltungen:
- EP-A- 0 496 344
- US-A1- 2003 158 781
- US-A1- 2005 278 776
- US-A1- 2006 076 402

## Beschreibung

Der Gegenstand betrifft ein Verfahren und ein System zum gesicherten Auslesen personenbezogener Daten, insbesondere von Smartcards. Insbesondere ist das Verfahren für das Auslesen einer elektronischen Gesundheitskarte (eGK) mit Hilfe des Heilberufeausweises (HBA) geeignet.

Zugangberechtigungskontrollsysteme für Computer sind aus der Technik bekannt. Beispielsweise ist aus der europäischen Patentschrift EP 1 496 344 B1 eine Einrichtung zur Kontrolle der Berechtigung zur Bedienung eines Gerätes mit einer Betätigungseinheit bekannt. Bei der beschriebenen Anordnung wird über eine Sendespule ein elektromagnetisches Wechselfeld erzeugt. Ein Transponder (Schlüssel), der in dieses elektromagnetische Wechselfeld eindringt, wird durch die Energie der elektrischen Komponente des elektromagnetischen Feldes gespeist. Mit Hilfe der elektrischen Energie des Wechselfeldes sendet der Transponder daraufhin ein Antwortsignal aus. Das Antwortsignal wird durch die Sendespule empfangen, die bereits das elektromagnetische Wechselfeld ausgesendet hat. Durch Austausch von Informationen über das elektromagnetische Wechselfeld kann eine Authentifizierung des Transponders erfolgen. Bei einer erfolgreichen Authentifizierung/Autorisierung wird der Computer freigegeben. Nachteilig an dieser Anordnung ist es, dass die Reichweite des elektromagnetischen Wechselfeldes nur schwer einstellbar ist. Da der Transponder durch die elektrische Energie des elektromagnetischen Wechselfelds gespeist wird, muss dessen Sendeenergie hoch sein. Bei der bekannten Anordnung kommt es zu Störungen beim Austauschen von Authentifizierungsinformationen immer dann, wenn der Transponder nicht ausreichend Energie aus dem elektromagnetischen Wechselfeld beziehen kann.

Ein ähnliches System ist aus der DE 40 15 482 C1 bekannt. Auch hier wird die Authentifizierung eines Nutzers über eine berührungslose Abfrage erzeugt. Wie auch zuvor beschrieben, weist dieses System eine einzige Sende- und Empfangsspule auf, die das elektromagnetische Wechselfeld erzeugt, mit dessen Hilfe der Transponder gespeist wird und die gleichzeitig das vom Transponder erzeugte Antwortfeld empfängt. Auch hier kommt es zu Problemen bei der Reichweiteneinstellung des Wechselfeldes und zu Störungen bei der Kommunikation zwischen Transponder und Sende-/Empfangsspule.

Insbesondere für das Auslesen der elektronischen Gesundheitskarte hat der Gesetzgeber strenge Anforderungen hinsichtlich der Zugriffsberechtigung aufgestellt. So wird in Kürze der sogenannte Heilberufeausweis (HBA) eingeführt. Mit Hilfe des Heilberufeausweises soll ein Zugriff auf die personenbezogenen Daten auf der elektronischen Gesundheitskarte kontrolliert werden. Auf dem Heilberufeausweis sind neben Personenidentifikationen Zertifikate und Signaturen abgelegt, die einen gesicherten Zugriff auf die Daten auf der elektronischen Gesundheitskarte ermöglichen. Die Zertifikate auf dem Heilberufeausweis können unterschiedlichen Zugriffsberechtigungsklassen entsprechen. Eine Zugriffsberechtigungsklasse kann beispielsweise die eines Krankenpflegers sein, der beispielsweise lediglich Name und Adresse des Patienten von der elektronischen Gesundheitskarte auslesen kann. Eine weitere Zugriffsberechtigungsklasse kann die eines Arztes sein, der alle Inhalte auf der elektronischen Gesundheitskarte auslesen kann. Auch ist eine Zugriffsberechtigungsklasse eines Apothekers möglich, der beispielsweise auf bestehende und vergangene Medikamentenverschreibungen zugreifen kann. Je nach Zugriffsberechtigungsklasse können unterschiedliche personenbezogene Daten von der elektronischen Gesundheitskarte, die als kontaktierend auslesbare Datenkarte (Smartcard) gebildet ist, ermöglicht werden.

Neben der reinen Zugriffsberechtigung durch den Heilberufeausweis soll dieser zusätzlich als Sichtausweis dienen. D. h., dass der Heilberufeausweis beispielsweise im Krankenhaus als Sichtausweis getragen werden muss. Soll ein Zugriff auf personenbezogene Daten auf der elektronischen Gesundheitskarte erfolgen, muss der Sichtausweis jedoch abgenommen werden, und der Heilberufeausweis muss kontaktierend mit Hilfe eines entsprechenden Terminals ausgelesen werden. Dies ist in der Praxis umständlich, da der entsprechende Träger eines Heilberufeausweises mit der notwendigen Zugriffsberechtigungsklasse beim Zugriff auf die personenbezogene Daten auf der elektronischen Gesundheitskarte zugegen sein muss. Auch in größeren Apotheken müsste der berechtigte Apotheker beim jedem Zugriff auf die Gesundheitskarte persönlich anwesend sein. Neben diesem rein organisatorischen Problem besteht das zusätzliche Problem, dass der Heilberufeausweis kontaktierend ausgelesen werden muss, wodurch der Benutzer den Ausweis manuell in ein entsprechendes Leseterminal einstecken muss. Der immer wiederkehrende manuelle Zugriff auf den Heilberufeausweis kann jedoch zu hygienischen Problemen führen und eine Verbreitung von Bakterien und anderen Krankheitserregern in einem Krankenhaus beschleunigen.

Neben der Anwendung im Heilberufewesen ist ein geschützter Zugriff auch in Speditionswesen relevant. Ein elektronischer Fahrtenschreiber schreibt die einem einzelnen Fahrer zugeordneten Fahrten automatisch kontaktierend auf eine Smartcard, welche das elektronische Fahrtbuch repräsentiert. Der Spediteur ist durch den Gesetzgeber verpflichtet, diese Daten regelmäßig auszulesen und abzuspeichern. Zum Auslesen der Daten muss der Spediteur jedoch eine Zugriffsberechtigung nachweisen, welche nach der Art des oben beschriebenen Heilberufeausweises erfolgt. Auf einer dem Spediteur zugeordneten Smartcard wird kontaktierend ein Sicherheitsmerkmal ausgelesen, welches den Zugriff auf die Daten des elektronischen Fahrtenschreibers ermöglicht. Die Anzahl der Spediteurkarten ist jedoch per Gesetz auf 36 Stück beschränkt. Bei großen, europaweit agierenden Speditionen kann dies problematisch werden, da die Fahrzeuge nicht immer auf den Betriebshof zurückkehren, sondern eventuell mehrere 10.000 km zurücklegen, ehe sie auf einen Betriebshof zurückkehren. Das Auslesen mit nur 36 Spediteurskarten kann dann zum Problem werden, da nicht an jedem Standort, welches ein Fahrzeug anfährt, eine solche Karte vorliegen kann.

Aus den zuvor genannten Nachteilen ergibt sich die Aufgabe, in einer einfachen Art und Weise eine Zugriffsberechtigung auf einer Datenkarte für den Zugriff auf personenbezogene Daten einer ersten Datenkarte nachzuweisen.

Diese Aufgabe wird gemäß eines Gegenstandes durch ein Verfahren für den gesicherten Zugriff auf personenbezogene Daten gelöst. Ein Sicherheitsmerkmal wird kontaktierend von einer ersten Datenkarte ausgelesen, wobei das Sicherheitsmerkmal zumindest einen Zugriff auf personenbezogene Daten ermöglicht. Ein Transponder mit einer Datenträgeridentifikation wird berührungslos ausgelesen. Das Sicherheitsmerkmal und die Datenträgerinformation wird an einen Datenspeicher übertragen. Das Sicherheitsmerkmal wird mit der Datenträgeridentifikation verknüpft. Vor einem Auslesen zumindest personenbezogener Daten von einer zweiten Datenkarte wird die Datenträgeridentifikation des Transponders berührungslos ausgelesen und mit Hilfe der Datenträgerinformation wird von dem Datenspeicher zumindest das mit der Datenträgerinformation verknüpfte Sicherheitsmerkmal gelesen, wobei das Sicherheitsmerkmal eine Ausleseberechtigung der personenbezogenen Daten von der zweiten Datenkarte bedingt.

Durch die Verwendung eines berührungslos auslesbaren Transponders und die Verknüpfung der Datenträgeridentifikation des Transponders mit dem Sicherheitsmerkmal der ersten Datenkarte kann ein Zugriff auf personenbezogene Daten auf einer zweiten Datenkarte mit Hilfe des Transponders gesteuert werden Es ist erkannt worden, dass die Reichweiteneinstellung immer dann problematisch ist, wenn der Transponder energetisch durch das Abfragefeld gespeist wird. Daher wird vorgeschlagen, dass der Transponder eigengespeist ein Antwortfeld erzeugt. Sobald der Transponder das Abfragefeld, bevorzugt die magnetische Komponente, das B-Feld, sensiert, wird dieser aktiviert. Der Transponder kann seine Energie aus dem Abfragefeld beziehen, als auch eine eigene Energieversorgung aufweisen. Das Antwortfeld kann neben anderen Daten die Datenträgeridentifikation enthalten. In dem Lesemodul (Terminal) wird das Antwortfeld empfangen und die Datenträgeridentifikation gelesen.

Der Austausch der Datenträgeridentifikation über das Antwortfeld erfolgt bevorzugt verschlüsselt. Geeignete Verschlüsselungsalgorithmen sind bekannt.

Das Abfragefeld wird bevorzugt im Broadcast-Modus ausgesendet. D. h., dass das Abfragefeld in regelmäßigen Abständen durch das Lesemodul erzeugt wird und von allen Transpondern, die in der Reichweite des Abfragefeldes sind, empfangen werden kann.

Empfängt der Transponder das Abfragefeld, wertet dieser die im Abfragefeld enthaltenden Daten aus, und meldet sich bei dem Lesemodul an. Hierzu sendet der Transponder ein elektromagnetisches Antwortfeld aus, welches eine Datenträgeridentifikation enthält. Es ist beispielsweise möglich, dass der Transponder zunächst nur seine Identifikationsnummer übermittelt. Diese Identifikationsnummer wird in dem Lesemodul aus dem Antwortfeld ermittelt. Stimmt die Identifikationsnummer mit einer Identifikationsnummer aus einer in dem Lesemodul oder dem Computer gespeicherten Liste überein, so wird eine Authentifizierung des Transponders durchgeführt. Hierbei werden Authentifizierungsinformationen bevorzugt verschlüsselt über das elektromagnetische Antwortfeld zwischen Transponder und Lesemodul ausgetauscht und bei erfolgreicher Authentifizierung wird die Datenträgeridentifikation übertragen.

Es ist auch möglich, dass mehrere Transponder gleichzeitig das Abfragefeld sensieren. Um eine Störung der jeweils von den Transpondern ausgesendeten Antwortfelder untereinander zu vermeiden, wird auch vorgeschlagen, vor dem Aussenden des Antwortfeldes eine Anti-Kollisionsüberprüfung durchzuführen. Dabei kann beispielsweise ein Carrier-Sense-Multiple-Access (CSMA) Algorithmus angewandt werden. Auch ist ein Collision-Detect (CD) Modus aktivierbar.

Bevorzugt ist, dass das Lesemodul ein niederfrequentes Abfragefeld aussendet. Dieses niederfrequente Abfragefeld ist bevorzugt ein magnetisches Feld, welches mit Hilfe einer Spule erzeugt wird. Dadurch, dass das Abfragefeld niederfrequent ist, lässt sich dessen Reichweite leicht einstellen. Bevorzugt sind Reichweiten zwischen 30 und 90cm. Im Nahbereich ist die Feldstärke des magnetischen Feldes proportional zu 1/r³. Die Sendeantenne im Lesemodul und die Empfangsantenne im Transponder für das Abfragefeld sind für eine magnetische Kopplung ausgelegt. Die Antennen sind Spulen, deren ausgesendetes Feld eine im Vergleich zum elektrischen Anteil erheblich höheren magnetischen Anteil hat. Das Abfragefeld ist somit bevorzugt ein magnetisches Feld.

Wird in dem Transponder eine Empfangsschwelle für eine bestimmte Feldstärke des Magnetfeldes eingestellt, so kann die Reichweite des Abfragefeldes sehr genau eingestellt werden.

Bevorzugt ist, dass das Lesemodul zum Aussenden eines 125Hz Abfragefeldes eingerichtet ist.

Um zu erreichen, dass die Baugröße des Lesemoduls klein bleibt, wird auch vorgeschlagen, dass das Lesemodul eine das Abfragefeld erzeugende Sendespule aufweist. Da das Abfragefeld nur eine geringe Reichweite aufweisen muss und außerdem nicht zur energetischen Speisung des Transponders dienen muss, reicht eine Sendespule von kleiner Baugröße.

Um einen guten Empfang des Antwortfeldes zu ermöglichen, wird auch vorgeschlagen, dass das Lesemodul eine von der Sendespule getrennte Empfangsantenne aufweist. Über die Empfangsantenne kann das Antwortfeld empfangen werden. Die Empfangsantenne im Lesemodul ist eine an Hochfrequenzen angepasste HF-Antenne. Die HF-Antenne ist an den Empfangsschaltkreis angepasst. Die Antenne kann als Loop (Schleife) auf der Leiterbahn gebildet sein. Es ist erkannt worden, dass durch die Verwendung einer Sendespule und einer davon getrennten Empfangsantenne die Übertragungsqualität bei gleichzeitiger Reduktion der Baugröße erhöht werden kann.

Zum Empfangen des Abfragefeldes weist der Transponder bevorzugt eine Empfangsspule auf. Diese Empfangsspule kann beispielsweise eine richtungsunabhängige Empfangscharakteristik aufweisen. Dies ist beispielsweise mit Hilfe einer 3-D Ferrit-Spule möglich. Bei einer solchen 3-D Ferrit-Spule sind drei Spulen angeordnet, die in drei senkrecht zueinander stehenden Ebenen ausgerichtet sind. Die Empfangsspule ist für den Empfang eines Magnetfeldes ausgelegt.

Bevorzugt ist gemäß eines vorteilhaften Ausführungsbeispiels, dass der Transponder zur Erzeugung des Antwortfeldes eine Treiberschaltung aufweist. Die Treiberschaltung beaufschlagt eine Sendeantenne mit einem die Datenträgeridentifikation aufweisenden Signal. Die Sendeantenne ist bevorzugt dazu ausgelegt, hochfrequente Felder auszusenden. Über die Sendeantenne wird das Antwortfeld erzeugt.

Bevorzugt ist es, dass die Treiberschaltung batteriegespeist ist. In diesem Fall wird die Energieversorgung für das Antwortfeld durch eine Batterie ermöglicht. Es ist nicht mehr notwendig, dass die Treiberschaltung ihre Energie über das Abfragefeld bezieht. Vielmehr ermöglicht eine solche Ausgestaltung eine eigengespeiste Erzeugung des Antwortfeldes.

Das Antwortfeld ist bevorzugt ein hochfrequentes, elektromagnetisches Feld. Es hat sich gezeigt, dass eine Frequenz im Megahertzbereich, bevorzugt zwischen 400 und 950 Mhz, bspw. 433MHz, 868MHz 915MHz, 916MHz, für das Antwortfeld vorteilhaft ist. Dieses Frequenzband ist ein frei nutzbares ISM-Band und somit gebührenfrei. Das Antwortfeld ist ein elektrisches Feld mit einem elektrischen Feldanteil, der erheblich höher ist als der magnetische Anteil.

Wie bereits zuvor erwähnt, ist es besonders bevorzugt, dass das Lesemodul eine Empfangsantenne zum Austauschen von Authentifizierungsinformationen mit dem Transponder aufweist. Die Empfangsantenne ist bevorzugt derart gebildet, dass sie für den Empfang von Hochfrequenzfeldern optimiert ist. Über die Empfangsantenne kann das Lesemodul mit dem Transponder Informationen über ein Hochfrequenzfeld austauschen. Dadurch, dass der Transponder das Hochfrequenzfeld eigengespeist erzeugt, kann dieses eine hohe E-Feldstärke aufweisen, so dass die Empfangsantenne kleinbauend gestaltet sein kann.

Beispielsweise im Bereich der Heilberufe kann sich ein Arzt zunächst mit Hilfe seines Transponders und seines Heilberufeausweises (erste Datenkarte/Datenträger) am System anmelden. Hierzu wird der Heilberufeausweis kontaktierend an einem geeigneten Terminal ausgelesen. Parallel dazu wird berührungslos der Transponder ausgelesen. Die Informationen auf dem Transponder und die Informationen auf dem Heilberufeausweis werden in einem Datenspeicher verknüpft miteinander abgelegt.

Möchte der so angemeldete Arzt im Laufe seines Arbeitstages auf eine elektronische Gesundheitskarte (zweite Datenkarte/Datenträger) zugreifen, so kann er dies lediglich mit Hilfe seines Transponders tun. Hierzu muss der behandelnde Arzt oder eine Arzthelferin eine elektronische Gesundheitskarte mit Hilfe eines geeigneten Terminals kontaktierend auslesen. Vor dem Auslesen wird mit Hilfe eines geeigneten Terminals der dem Arzt zugeordnete Transponder berührungslos ausgelesen. Die berührungslos ausgelesenen Informationen des Transponders werden an den Datenspeicher übermittelt und die diesen Informationen zugeordneten Informationen des Heilberufeausweises werden zurück übermittelt. Die Informationen des Heilberufeausweises liegen dann am Terminal vor, welches zum Auslesen der elektronischen Gesundheitskarte verwendet wird. Mit Hilfe der so erhaltenden Informationen kann geprüft werden, ob eine Zugriffsberechtigung auf die personenbezogenen Daten auf der elektronischen Gesundheitskarte vorliegt. Eine solche Zugriffsberechtigung kann universal sein, oder auch auf einzelne Bereiche der elektronischen Gesundheitskarte beschränkt sein. Liegt eine Zugriffsberechtigung vor, können die entsprechenden Daten von der elektronischen Gesundheitskarte ausgelesen werden.

Mit Hilfe des vorgestellten Verfahrens ist es möglich, im Krankenhausalltag berührungslos eine Zugriffsberechtigung nachzuweisen, ohne dass die vom Gesetzgeber geforderte Sicherung der personenbezogenen Daten vernachlässigt wird. Beim kontaktierenden Auslesen der ersten Datenkarte wird zumindest ein Sicherheitsmerkmal ausgelesen. Dieses Sicherheitsmerkmal kann beispielsweise die Bezeichnung der Zugriffsberechtigungsklasse sein. Das Sicherheitsmerkmal kann weitere Daten enthalten, welche einen Zugriff auf bestimmte Bereiche innerhalb einer zweiten Datenkarte ermöglichen. Das kontaktierende Auslesen geschieht beispielsweise mit Hilfe herkömmlicher Ausleseverfahren, bei denen Kontaktpins eines Terminals mechanisch in Kontakt mit Kontaktpads einer Smartcard treten, um somit eine elektrische Verbindung herzustellen und eine Kommunikation mit der Smartcard zu etablieren.

Das berührungslose Auslesen des Transponders kann mit Hilfe eines Abfragefeldes und eines elektromagnetischen Antwortfeldes erfolgen. Das Abfragefeld kann beispielsweise eine bestimmte Reichweite haben, in der ein Transponder sein muss, um ausreichend energetisch versorgt zu werden, um ein entsprechendes Antwortfeld zu erzeugen.

Nachdem mit Hilfe des Transponders die Datenträgerinformation übertragen wurde, kann diese zusammen mit dem den Zugriff auf personenbezogene Daten ermöglichenden Sicherheitsmerkmal an einen Datenspeicher übertragen werden. Beispielsweise ist ein Datenspeicher in einem lokalen Netzwerk möglich. Die Übertragung kann drahtlos als auch drahtgebunden erfolgen. In dem Datenspeicher wird bevorzugt die Datenträgerinformation mit dem Sicherheitsmerkmal verknüpft. Eine Verknüpfung kann dadurch erfolgen, dass der Datenträgerinformation ein bestimmtes Sicherheitsmerkmal zugeordnet wird. Auch ist es möglich, dass mehrere Sicherheitsmerkmale einer Datenträgeridentifikation zugeordnet werden. Beispielsweise kann ein Arzt, der gleichzeitig auch eine Apothekerberechtigung hat, beide Sicherheitsmerkmale auf unterschiedlichen ersten Datenkarten mit sich führen. Diese beiden Sicherheitsmerkmale können zusammen mit der Datenträgeridentifikation verknüpft werden.

Für den Zugriff auf personenbezogene Daten, beispielsweise Fahrtenschreiberdaten oder Daten einer elektronischen Gesundheitskarte, wird diese in ein zweites Terminal eingesteckt und kontaktierend ausgelesen. Vor einem Zugriff auf die personenbezogenen Daten wird jedoch zunächst die Datenträgeridentifikation des Transponders berührungslos ausgelesen. D.h., der behandelnde Arzt oder der Spediteur oder eine andere Person bzw. dessen Transponder, die ein Zugriff auf die personenbezogenen Daten durchführen möchte, muss im Bereich des Abfragefeldes des Terminals sein. Die Datenträgeridentifikation des Transponders wird im Antwortfeld übermittelt. Dies kann verschlüsselt geschehen. Über eine bevorzugt verschlüsselte Verbindung wird die Datenträgeridentifikation an den Datenspeicher übermittelt und die dieser Datenträgeridentifikation zugeordneten Sicherheitsmerkmale ausgelesen. Die ausgelesenen Sicherheitsmerkmale werden ebenfalls bevorzugt verschlüsselt zurück an das die zweite Datenkarte kontaktierend auslesende Terminal übermittelt. Mit Hilfe der erhaltenen Sicherheitsmerkmale kann überprüft werden, ob ein Zugriff auf die personenbezogenen Daten möglich ist oder nicht. Stellt das Sicherheitsmerkmal eine Ausleseberechtigung von personenbezogenen Daten der zweiten Datenkarte dar, werden die der Berechtigung unterliegenden Datenbereiche der zweiten Datenkarte freigegeben und können ausgelesen werden.

Für eine verschlüsselte Kommunikation mit dem Transponder, als auch für eine verschlüsselte Kommunikation mit dem Datenspeicher, kann der Transponder einen Schlüssel zur Verschlüsselung aufweisen. Dies kann beispielsweise ein öffentlicher Schlüssel sein, der eine Kommunikation mit dem Transponder ermöglicht. Auch kann dies ein öffentlicher Schlüssel sein, der eine Kommunikation mit dem Datenspeicher ermöglicht. Ein Austausch von öffentlichen Schlüsseln zwischen Transponder, Terminal und Datenspeicher ist möglich. Andere, symmetrische als auch asymmetrische Verschlüsselungsverfahren sind ebenfalls möglich.

Gemäß eines vorteilhaften Ausführungsbeispiels wird vorgeschlagen, dass zusammen mit dem berührungslosen Auslesen der Datenträgeridentifikation eine persönliche Identifikationsnummer abgefragt wird, und dass die persönliche Identifikationsnummer eine Ausleseberechtigung der zweiten Datenkarte bedingt. Die auf der zweiten Datenkarte gespeicherten Informationen können beispielsweise über eine persönliche Identifikationsnummer (PIN) gesichert sein. Neben dem Vorliegen des Sicherheitsmerkmals, d.h. der Berechtigung der auslesenden Personen für den Zugriff auf die entsprechenden Daten, kann zusätzlich eine persönliche Identifikationsnummer abgefragt werden, deren korrekte Eingabe erst die hinreichende Bedingung ist, dass die personenbezogenen Daten von der zweiten Datenkarte ausgelesen werden.

Es ist auch möglich, dass zusammen mit dem Auslesen der Datenträgeridentifikation und dem Verknüpfen der Datenträgeridentifikation mit dem Sicherheitsmerkmal dieser Verknüpfung eine persönliche Identifikationsnummer zugeordnet wird. In diesem Falle kann beim berührungslosen Auslesen des Transponders zusätzlich die persönliche Identifikationsnummer abgefragt werden und die der Datenträgeridentifikation zugeordneten Sicherheitsmerkmale können nur bei Vorliegen einer korrekten persönlichen Identifikationsnummer ausgelesen werden.

Um sicherzustellen, dass Zugriffe auf die personenbezogenen Daten auf der zweiten Datenkarte nachträglich zurückverfolgt werden können, ist es notwendig, die zugreifende Person identifizieren zu können. Aus diesem Grunde wird vorgeschlagen, dass zumindest eine Personenidentifikation von dem ersten Datenträger kontaktierend ausgelesen wird, dass die ausgelesene Personenidentifikation an den Datenspeicher übertragen wird, und dass die Personenidentifikation mit der Datenträgeridentifikation verknüpft wird. Im Beispiel des Heilberufeausweises kann die Personenidentifikation einen Rückschluss auf die Person ermöglichen, welche die Patientendaten von der elektronischen Gesundheitskarte gelesen oder verändert hat.

Für den Fall des nachträglichen Zurückverfolgens ist es gemäß eines vorteilhaften Ausführungsbeispiels vorgeschlagen, dass ein Zugriff auf die zweite Datenkarte zusammen mit der Personenidentifikation gespeichert wird. Ein lesender Zugriff kann beispielsweise auf der zweiten Datenkarte zusammen mit dem entsprechenden Datensatz abgelegt werden. Ein schreibender Zugriff auf die zweite Datenkarte kann ebenfalls zusammen mit der Personenidentifikation und beispielsweise auch einem Zeitstempel abgespeichert werden. Dies ermöglicht es, im Nachhinein zurückzuverfolgen, welche Zugriffe auf die personenbezogenen Daten der zweiten Datenkarte erfolgt sind und von wem diese durchgeführt wurden.

Um sicherzustellen, dass bei einem schreibenden Zugriff die geschriebenen Daten auch tatsächlich von der Person stammen, welche anhand der Personenidentifikation identifiziert wurde und um zu vermeiden, dass nachträglich diese Daten manipuliert werden, wird vorgeschlagen, dass die Personenidentifikation zumindest eine elektronische Signatur aufweist. Mit Hilfe der elektronischen Signatur können bei einem schreibenden Zugriff die geschriebenen Daten signiert werden. Daraufhin lassen sich diese Daten nicht mehr, ohne dass dies auffällt, verändern. Durch die Signatur wird sichergestellt, dass die von einer Person geschriebenen Daten unverfälscht bleiben und dieser Person zugeordnet werden können.

Insbesondere bei Anwendungen der Heilberufe kann die Verknüpfung des Sicherheitsmerkmals mit der Datenträgeridentifikation abhängig von einem Zeitintervall oder von einer räumlichen Erreichbarkeit des Transponders sein. Beispielsweise ist es möglich, wenn sich ein behandelnder Arzt bei Schichtbeginn mit seinem Transponder und seiner Heilberufekarte anmeldet, dass die Verknüpfung dieser Daten mit Ablauf seiner Schicht automatisch getrennt wird. Auch kann es möglich sein, die Anwesenheit des Transponders innerhalb eines Gebäudes zu überwachen und bei Verlassen des Überwachungsbereichs die Verknüpfung des Sicherheitsmerkmals mit der Datenträgeridentifikation zu trennen. Hierdurch ist beispielsweise auch ein guter Schutz vor Diebstahl des Transponders möglich.

Zur Speicherung der Verknüpfung zwischen Sicherheitsmerkmal, Datenträgeridentifikation und beispielsweise auch Personenidentifikation kann ein zentral angeordneter Datenspeicher vorgesehen sein. Dieser kann beispielsweise an einer zentralen Stelle eines Netzwerks angeordnet sein. Auch ist es möglich, dass der Datenspeicher in einem vor Zugriff geschützten Bereich angeordnet ist, so dass Datenmanipulationen direkt am Datenspeicher erschwert werden.

Ein weitere Aspekt ist ein System für den gesicherten Zugriff auf personenbezogene Daten umfassend eine erste, einen Zugriff auf personenbezogene Daten ermöglichendes Sicherheitsmerkmal speichernde, kontaktierend auslesbare Datenkarte, einen eine Datenträgeridentifikation speichernden, berührungslos auslesbaren Transponder, und eine personenbezogene, Daten speichernde, kontaktierend auslesbare zweite Datenkarte, ein erstes Terminal eingerichtet zum kontaktierenden Auslesen zumindest des Sicherheitsmerkmals von der ersten Datenkarte, und zum berührungslosen Auslesen der Datenträgeridentifikation von dem Transponder, wobei das Terminal mit einem Datenspeicher zum Übertragen des Sicherheitsmerkmals und der Datenträgeridentifikation verbunden ist, wobei der Datenspeicher dazu eingerichtet ist, das Sicherheitsmerkmal mit der Datenträgeridentifikation zu verknüpfen, ein zweites Terminal eingerichtet zum Auslesen zumindest personenbezogener Daten von einer zweiten Datenkarte und zum berührungslosen Auslesen des Transponders derart, dass vor einem Zugriff auf die personenbezogenen Daten das Terminal die Datenträgeridentifikation des Transponders berührungslos ausliest und mit Hilfe der Datenträgerinformation von dem Datenspeicher von zumindest das mit der Datenträgerinformation verknüpfte Sicherheitsmerkmale liest, wobei das Terminal derart eingerichtet ist, dass die personenbezogenen Daten nur bei einer vorliegenden Ausleseberechtigung der personenbezogenen Daten von der zweiten Datenkarte durch das Sicherheitsmerkmal ausgelesen werden.

Ein weiterer Gegenstand ist ein Terminal umfassend erste Auslesemittel zum kontaktierenden Auslesen des zumindest einen Sicherheitsmerkmals von einer ersten Datenkarte, zweite Auslesemittel zum berührungslosen Auslesen einer Datenträgerinformation von einem Transponder, Kommunikationsmittel zum Übertragen des Sicherheitsmerkmals und der Datenträgeridentifikation an einen Datenspeicher.

Ein weiterer Gegenstand ist ein Terminal umfassend erste Auslesemittel zum Auslesen zumindest personenbezogener Daten von einer zweiten Datenkarte, zweiter Auslesemittel zum berührungslosen Auslesen von Datenträgerinformationen eines Transponders, Steuermittel eingerichtet zum Auslesen des mit der Datenträgerinformation verknüpften Sicherheitsmerkmals von einem Datenspeicher mit Hilfe der ausgelesenen Datenträgerinformation vor einem Zugriff auf die personenbezogenen Daten, wobei das Terminal derart eingerichtet ist, dass die personenbezogenen Daten nur bei einer vorliegenden Ausleseberechtigung durch das Sicherheitsmerkmal ausgelesen werden.

Nachfolgend wird der Gegenstand anhand einer Ausführungsbeispiele zeigenden Zeichnung näher erläutert. In der Zeichnung zeigen:
- Fig. 1: ein erstes Terminal zum Einlesen einer ersten Datenkarte und eines Transponders;
- Fig. 2: ein zweites Terminal zum Einlesen einer zweiten Datenkarte und eines Transponders;
- Fig. 3a: schematisch eine erste Datenkarte zusammen mit den auf ihr gespeicherten Informationen;
- Fig. 3b: schematisch eine zweite Datenkarte zusammen mit den auf ihr abgelegten Informationen;
- Fig. 4: ein System nach einem Ausführungsbeispiel.

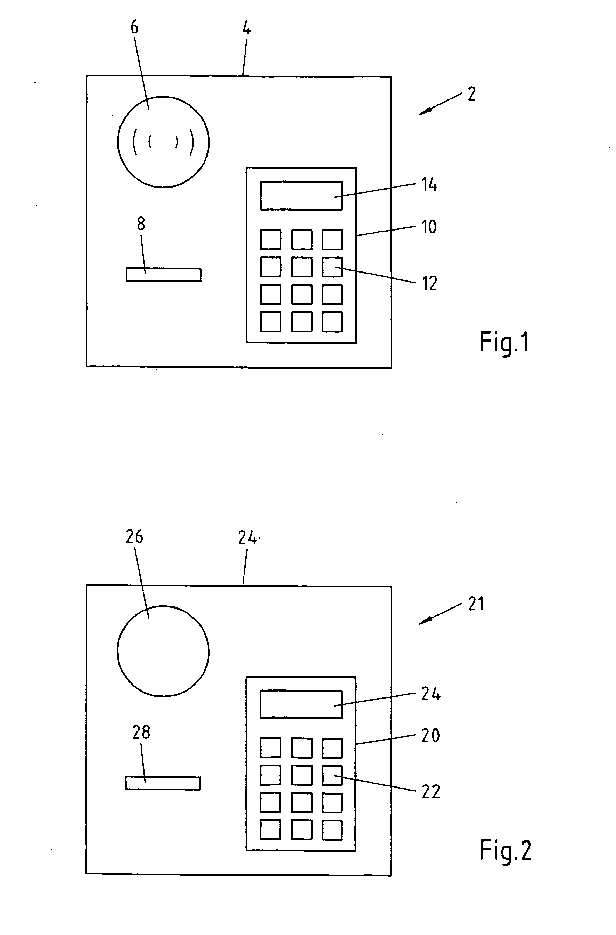

Fig. 1 zeigt ein erstes Terminal 2 mit einem Gehäuse 4. In dem Gehäuse 4 sind Auslesemittel zum berührungslosen als auch zum kontaktierenden Auslesen von Datenträgern angeordnet. Ferner ist in dem Gehäuse 4 eine Stromversorgung als auch eine Kommunikationseinheit zur Kommunikation und mit einem zentralen Datenspeicher über ein Netzwerk, beispielsweise ein LAN, vorgesehen.

In der dargestellten Ansicht des Gehäuses 4 ist ein erster Bereich 6 zum berührungslosen Auslesen eines Transponders vorgesehen. Innerhalb des Gehäuses 4 im Bereich 6 ist eine Sende- und Empfangsantenne angeordnet, zum Aussenden eines Abfragefeldes und zum Empfangen eines Antwortfeldes.

Darüber hinaus ist ein Eingabeschlitz 8 vorgesehen, zum Einführen einer kontaktierend auslesbaren Datenkarte. Schließlich ist ein Eingabebereich 10 mit Zifferntasten 12 und einem Display 14 im Gehäuse 4 angeordnet. Über die Zifferntasten 12 kann eine persönliche Identifikationsnummer eingegeben werden und über das Display 14 können Arbeitsanweisungen an den Benutzer ausgegeben werden. Das in Figur 1 dargestellte Terminal 2 eignet sich zum berührungslosen Auslesen eines Transponders als auch zum kontaktierenden Auslesen einer Datenkarte. Die vom Transponder ausgelesenen Datenträgeridentifikationen als auch die von der Datenkarte ausgelesenen Sicherheitsmerkmale, wie beispielsweise Signatur und Zertifikat, können über die Kommunikationseinheit an einen zentralen Datenspeicher übertragen werden und dort verknüpft miteinander gespeichert werden. Zum Auslesen der ersten Datenkarte kann beispielsweise eine Eingabe einer persönlichen Identifikationsnummer über die Zifferntasten 12 abgefragt werden. Auch kann die Verknüpfung zwischen Datenträgeridentifikation und Sicherheitsmerkmalen mittels einer persönlichen Identifikationsnummer gesichert werden, so dass diese Verknüpfung lediglich ausgelesen werden kann, wenn eine entsprechende Nummer an einem zweiten Terminal eingegeben wird.

Figur 2 zeigt ein zweites Terminal 21, welches im Wesentlichen identisch zu dem in Figur 1 gezeigten Terminal 2 gebildet ist. Mit Hilfe des zweiten Terminals 21 kann eine zweite Datenkarte, beispielsweise eine elektronische Gesundheitskarte, im Eingabeschlitz 28 ausgelesen werden. Über den Bereich 6 kann ein Transponder gehalten werden und berührungslos ausgelesen werden. Über den Eingabebereich 20 kann über das Display 24 der Benutzer zu verschiedenen Handlungen angewiesen werden und über die Zifferntasten 22 können persönliche Identifikationsnummer, die beispielsweise dem Sicherheitsmerkmal zugeordnet sind oder der Verknüpfung zwischen Sicherheitsmerkmal und Datenträgeridentifikation zugeordnet sind, eingegeben werden. Das zweite Terminal 21 kann ebenfalls mit dem zentralen Datenspeicher über ein Netzwerk kommunizieren.

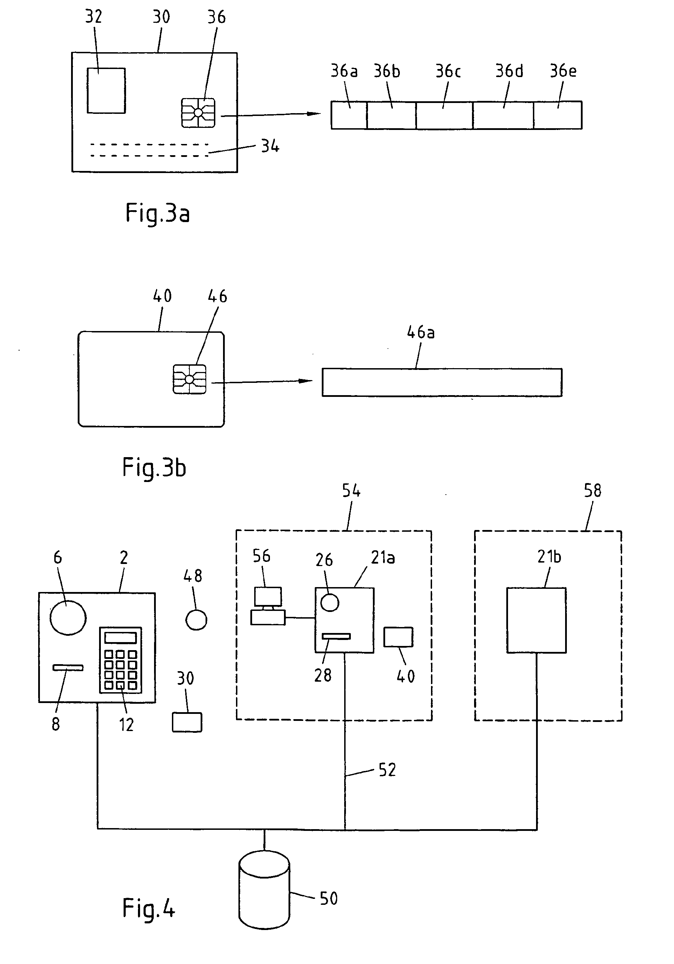

Figur 3a zeigt eine erste Datenkarte 30, welches beispielsweise ein Heilberufeausweis ist. In einem Sichtbereich 32 ist ein Lichtbild des Benutzers vorgesehen. In einem Textbereich 34 sind verschiedene Informationen zu dem Benutzer, wie beispielsweise Name, Position und Zugriffsberechtigungsklasse angegeben. Auf einer Smartcard 36 sind diese Informationen, neben weiteren, elektronisch abgelegt und können kontaktierend ausgelesen werden. Ein Datenfeld, welches über die Smartcard 36 ausgelesen werden kann, ist schematisch dargestellt. Neben einem Header 36a können Personenidentifikationen 36b, Sicherheitsmerkmale 36c, wie beispielsweise Zertifikat und Signatur, weitere Daten 36d und ein Prüfcode 36e abgelegt sein. Die Datenfelder 36a-36e lassen sich mittels geeigneter Ausleseelektronik kontaktierend von der Smartcard 36auslesen.

Fig. 3b zeigt eine zweite Datenkarte 40, beispielsweise eine elektronische Gesundheitskarte. Auf der zweiten Datenkarte 40 ist ebenfalls eine Smartcard 46 angeordnet, auf welcher Patientendaten 46a abgespeichert sein können. Diese Daten 46a können neben Personendaten und Versicherungsdaten auch Daten 46a über die elektronische Krankheitsakte, Medikationen, Rezepte, Befunde, und weitere gesundheitsrelevante Daten sein. Diese Daten lassen sich über die Smartcard 46 kontaktierend auslesen. Das Auslesen der Daten 46a kann an das Vorhandensein eines Sicherheitsmerkmals geknüpft sein. Auch können die Daten 46a mittels einer persönlichen Identifikationsnummer gesichert sein, welche eingegeben werden muss und vorliegen muss, bevor die Daten ausgelesen werden.

Ein System aus den Terminals 2, 21 der Figuren 1 und 2 und den Datenkarten aus den Figuren 3 sowie einem Datenspeicher 50 und zumindest einem Transponder 48 ist in Figur 4 dargestellt. Dargestellt ist ein erstes Terminal 2, zwei zweite Terminals 21a, 21b, ein zentraler Datenspeicher 50 und ein Netzwerk 52, beispielsweise ein Local Area Network sowie die Datenkarte 36, 40 und der Transponder 48. Am Beispiel des Heilberufeausweises soll das Verfahren näher erläutert werden, dieses Verfahren ist jedoch auch im Speditionsgewerbe, wie bereits oben erläutert, anwendbar.

Zunächst meldet sich ein Besitzer eines Heilberufeausweises 30 (erste Datenkarte) zusammen mit seinem persönlichen Transponder am ersten Terminal 2 an. Hierzu schiebt der Benutzer seinen Heilberufeausweis 30 in den Eingabeschlitz 8 und hält seien Transponder 48 in die Nähe des Bereiches 6. Der Empfangsbereich zum Auslesen des Transponders 48 lässt sich über die Feldstärke einstellen, wie zuvor erläutert worden ist. Ist sowohl der Heilberufeausweis 30 in den Schlitz 8 gesteckt, als auch der Transponder 48 in der Nähe des Bereichs 6, wird die Datenträgeridentifikation von dem Transponder 48 ausgelesen und gleichzeitig werden Sicherheitsmerkmale von dem Heilberufeausweis 30 gelesen. Das Auslesen dieser Daten kann beispielsweise über eine Eingabe einer persönlichen Identifikationsnummer über die Zifferntasten 12 gesichert sein.

Die ausgelesenen Informationen über den Datenträger 30 als auch die Sicherheitsmerkmale werden zusammen über eine verschlüsselte Kommunikation an den Datenspeicher 50 übermittelt. In dem Datenspeicher 50 werden Tuppel aus Datenträgeridentifikation und Sicherheitsmerkmal gespeichert. Auch ist es möglich, dass Trippel aus Personenidentifikationen, die ebenfalls auf dem Heilberufeausweis 30 gespeichert sind, Sicherheitsmerkmalen und Datenträgeridentifikation gespeichert werden. Bevorzugt werden alle auf dem Heilberufeausweis 30 vorhandenen Informationen, die in den Datenfeldern 36a-e abgelegt sind, verknüpft mit der Datenträgeridentifikation des Transponders 48 in dem Datenspeicher 50 abgelegt. Nach dem Einlesevorgang, bewegt sich der Benutzer des Heilberufeausweises 30 frei innerhalb beispielsweise eines Krankenhauses.

Möchte der Benutzer der Heilberufeausweises 30 beispielsweise eine Patientenakte einsehen, und ist in einem ersten Behandlungsraum 54, fordert der Halter des Heilberufeausweises 30 den Patienten auf, seine elektronische Gesundheitskarte 40 in den Eingabeschlitz 28 zu schieben. Die Feldstärke des Abfragefeld zur Abfrage des Transponders 48 ist so eingestellt, dass es im gesamten Raum 54 ein Antwortfeld des Transponders 48 erzeugt. Hierdurch erhält das Terminal 21a die Datenträgeridentifikation des Transponders 48.

Bevor die in den Eingabeschlitz 28 eingeschobene elektronische Gesundheitskarte 40 ausgelesen werden kann, wird über das Netzwerk 52 die ausgelesene Datenträgeridentifikation verschlüsselt an den zentralen Datenspeicher 50 übermittelt.

In dem zentralen Datenspeicher 50 wird überprüft, ob zu dieser Datenträgeridentifikation verknüpfte Daten vorliegen. Ist dies der Fall, werden diese verschlüsselt zurück an das Terminal 21a übermittelt. In dem Terminal 21a liegen dann die Sicherheitsmerkmale vor, die eine Ausleseberechtigung der elektronischen Gesundheitskarte 40 bedingen. Liegen diese Informationen vor, kann die elektronische Gesundheitskarte 40, welche in den Eingabeschlitz 28 eingeschoben ist, ausgelesen werden und die entsprechenden Informationen können an einen Computer 56 dargestellt werden.

Der Arzt, der die Informationen benötigt, muss seinen Heilberufeausweis 30 nicht in die Hand nehmen, sondern kann ihn als Sichtausweis tragen. Die Sicherung der Patientendaten auf der elektronischen Gesundheitskarte 40 ist gegeben, da das Auslesen nur dann möglich ist, wenn der Arzt mit seinem Transponder 48 im Empfangsfeld des Terminals 21a ist.

Entfernt der Arzt sich aus dem Raum 54, verlässt sein Transponder 48 das Abfragefeld, und in dem Terminal 21a werden die Sicherheitsmerkmale gelöscht und ein Auslesen der Daten von der elektronischen Gesundheitskarte 40 ist nicht mehr möglich. Bewegt der Arzt sich nun in einem zweiten Raum 58, in dem ein zweites Terminal 21b steht, kann er seine Berechtigung zum Auslesen der elektronischen Gesundheitskarte 40 erneut nachweisen und eine andere elektronische Gesundheitskarte 40 auslesen.

Mit Hilfe des gezeigten Verfahrens ist es für einen Arzt möglich, sich frei im Krankenhaus zu bewegen, ohne seine Berechtigung zum Auslesen von elektronischen Gesundheitskarten 40 zu verlieren. Es ist sichergestellt, dass nur in Anwesenheit des Arztes die elektronische Gesundheitskarte 40 ausgelesen werden kann. Ferner kann sichergestellt werden, dass die Verknüpfung zwischen Datenträgeridentifikation und Sicherheitsmerkmalen im Datenspeicher 50 dann gelöscht wird, wenn der Arzt das Krankenhaus verlässt, beispielsweise wenn der Transponder 48 einen vorher definierten Empfangsbereich verlässt oder durch definierte Empfangsschleusen tritt und die Datenträgeridentifikation in diesen Schleusen erfasst wird.

Mit Hilfe des gezeigten Verfahren ist es einerseits möglich, hygienisch einwandfrei/Leseberechtigung für eine elektronische Gesundheitskarte nachzuweisen. Andererseits ist der organisatorische Ablauf nicht gestört, da die Informationen an den Orten verfügbar sind, an denen sie benötigt werden.

## Patentansprüche

1. Verfahren für den gesicherten Zugriff auf personenbezogene Daten umfassend:
- kontaktierendes Auslesen zumindest eines einen Zugriff auf personenbezogene Daten ermöglichenden Sicherheitsmerkmals von einer ersten Datenkarte,
- berührungsloses Auslesen zumindest einer Datenträgeridentifikation von einem Transponder,
- Übertragen des Sicherheitsmerkmals und der Datenträgeridentifikation an einen Datenspeicher,
- Verknüpfen des Sicherheitsmerkmals mit der Datenträgeridentifikation,
- kontaktierendes Auslesen zumindest personenbezogener Daten von einer zweiten Datenkarte derart, dass vor einem Zugriff auf die personenbezogenen Daten die Datenträgeridentifikation des Transponders berührungslos ausgelesen wird und mit Hilfe der Datenträgerinformation von dem Datenspeicher zumindest das mit der Datenträgerinformation verknüpfte Sicherheitsmerkmal gelesen wird, wobei das Sicherheitsmerkmal eine Ausleseberechtigung der personenbezogenen Daten von der zweiten Datenkarte bedingt.

2. Verfahren nach Anspruch 1, **dadurch gekennzeichnet, dass** von dem Transponder ein Schlüssel zur Verschlüsselung der Kommunikation mit dem Datenspeicher berührungslos ausgelesen wird.

3. Verfahren nach Anspruch 2, **dadurch gekennzeichnet, dass** das Übertragen des Sicherheitsmerkmals und der Datenträgeridentifikation an den Datenspeicher und/oder das Auslesen der personenbezogenen Daten mit Hilfe des Schlüssels verschlüsselt ist.

4. Verfahren nach einem der vorangehenden Ansprüche, **dadurch gekennzeichnet, dass** zusammen mit dem berührungslosen Auslesen der Datenträgerinformation eine persönliche Identifikationsnummer abgefragt wird, und dass die persönliche Identifikationsnummer eine Ausleseberechtigung der zweiten Datenkarte bedingt.

5. Verfahren nach einem der vorangehenden Ansprüche, **dadurch gekennzeichnet, dass** zumindest eine Personenidentifikation von dem ersten Datenträger kontaktierend ausgelesen wird, dass die ausgelesene Personenidentifikation an den Datenspeicher übertragen wird, und dass die Personenidentifikation mit der Datenträgeridentifikation verknüpft wird.

6. Verfahren nach Anspruch 5, **dadurch gekennzeichnet, dass** ein Zugriff auf die zweite Datenkarte zusammen mit der Personenidentifikation gespeichert wird.

7. Verfahren nach Anspruch 5, **dadurch gekennzeichnet, dass** die Personenidentifikation zumindest eine elektronische Signatur aufweist.

8. Verfahren nach einem der vorangehenden Ansprüche, **dadurch gekennzeichnet, dass** das Sicherheitsmerkmal zumindest ein elektronisches Zertifikat aufweist.

9. Verfahren nach einem der vorangehenden Ansprüche, **dadurch gekennzeichnet, dass** die Verknüpfung des Sicherheitsmerkmals mit der Datenträgeridentifikation in Abhängigkeit von
A) einem Zeitintervall, oder
B) einer räumliche Erreichbarkeit des Transponders, getrennt wird.

10. Verfahren nach einem der vorangehenden Ansprüche, **dadurch gekennzeichnet, dass** die erste Datenkarte ein Heilberufeausweis ist und dass die zweite Datenkarte eine elektronische Gesundheitskarte ist.

11. Verfahren nach einem der vorangehenden Ansprüche, **dadurch gekennzeichnet, dass** der Datenspeicher zentral angeordnet wird.

12. Verfahren nach einem der vorangehenden Ansprüche, **dadurch gekennzeichnet, dass** die ausgelesenen personenbezogenen Daten an einem Computer dargestellt werden.

13. System für den gesicherten Zugriff auf personenbezogene Daten umfassend:
- eine erste, einen Zugriff auf personenbezogene Daten ermöglichendes Sicherheitsmerkmal speichernde, kontaktierend auslesbare Datenkarte,
- einen eine Datenträgeridentifikation speichernden, berührunglos auslesbaren Transponder, und
- eine personenbezogene, Daten speichernde, kontaktierend auslesbare zweite Datenkarte,
- ein erste Terminal eingerichtet zum kontaktierenden Auslesen zumindest des Sicherheitsmerkmals von der ersten Datenkarte, und zum berührungslosen Auslesen der Datenträgeridentifikation von dem Transponder,
- wobei das Terminal mit einem Datenspeicher zum Übertragen des Sicherheitsmerkmals und der Datenträgeridentifikation verbunden ist,
- wobei der Datenspeicher dazu eingerichtet ist, das Sicherheitsmerkmal mit der Datenträgeridentifikation zu verknüpfen,
- ein zweites Terminal eingerichtet zum kontaktierenden Auslesen zumindest personenbezogener Daten von einer zweiten Datenkarte und zum berührungslosen Auslesen des Transponders derart, dass vor einem Zugriff auf die personenbezogenen Daten das Terminal die Datenträgeridentifikation des Transponders berührungslos ausliest und mit Hilfe der Datenträgerinformation von dem Datenspeicher zumindest das mit der Datenträgerinformation verknüpfte Sicherheitsmerkmal liest,
- wobei das Terminal derart eingerichtet ist, dass die personenbezogenen Daten nur bei einer vorliegenden Ausleseberechtigung der personenbezogenen Daten von der zweiten Datenkarte durch das Sicherheitsmerkmal ausgelesen werden.

## Claims

1. Method for secure access to personal data comprising:
- reading in a contacting manner of at least one security feature of a first data card enabling access to personal data,
- contactless reading of at least one data carrier identification by a transponder,
- transmitting the security feature and the data carrier identification to a data memory,
- associating of the security feature with the data carrier identification,
- reading of at least personal data from a second data card in a contacting manner, such that before access to the personal data the data carrier identification of the transponder is read in a contactless manner and, by means of the data carrier information at least the security feature carrier information associated with the data carrier information is read from the data memory, wherein the security feature determines a read permission for the personal data from the second data card.

2. The method according to Claim 1,
**characterized in that**
a key for the encryption of the communication with the data memory is read contactlessly by the transponder.

3. The method according to Claim 2,
**characterized in that**
the transmitting of the security feature and of the data carrier identification to the data memory and/or the reading of the personal data is encrypted using the key.

4. The method according to any one of the preceding claims,
**characterized in that**
together with the contactless reading of the data carrier information a personal identification number is queried, and that the personal identification number determines permission to read from the second data card.

5. The method according to any one of the preceding claims,
**characterized in that**
at least one personal identification is read from the first data carrier in a contacting manner, that the personal identification that is read is transferred to the data memory, and that the personal identification is associated with the data carrier identification.

6. The method according to Claim 5,
**characterized in that**
access to the second data card is stored together with the personal identification.

7. The method according to Claim 5,
**characterized in that**
the personal identification comprises at least one electronic signature.

8. The method according to any one of the preceding claims,
**characterized in that**
the security feature comprises at least one electronic certificate.

9. The method according to any one of the preceding claims,
**characterized in that**
the association between the security feature and the data carrier identification is separated in dependence of
(A) a time interval, or
(B) a spatial accessibility of the transponder.

10. The method according to any one of the preceding claims,
**characterized in that**
the first data card is a health professional identity card and that the second data card is an electronic health card.

11. The method according to any one of the preceding claims,
**characterized in that**
the data memory is centrally located.

12. The method according to any one of the preceding claims,
**characterized in that**
the personal data read out are displayed on a computer.

13. System for secure access to personal data comprising:
- a first data card storing a security feature enabling access to personal data, which is readable in a contacting manner,
- a transponder storing a data carrier identification, which is readable in a contactless manner, and
- a second data card storing personal data, which is readable in a contacting manner,
- a first terminal which is configured to read in a contacting manner at least the security feature of the first data card, and for contactless reading of the data carrier identification from the transponder,
- wherein the terminal is connected to a data memory for transmitting the security feature and the data carrier identification,
- wherein the data memory is configured to associate the security feature with the data carrier identification,
- a second terminal which is configured to read at least personal data from a second data card and for contactless reading from the transponder such that, prior to access to the personal data the terminal reads out the data carrier identification from the transponder in a contactless manner, and by means of the data carrier information reads at least the security feature associated with the data carrier information from the data memory,
- wherein the terminal is configured in such a manner that the personal data are only read when readout permission to read the personal data from the second data card is given by means of the security feature.

## Revendications

1. Procédé pour l'accès sécurisé à des données à caractère personnel, comprenant :
- lecture par contact d'au moins une caractéristique de sécurité permettant un accès à des données à caractère personnel d'une première carte de données,
- lecture sans contact d'au moins une identification de support de données d'un transpondeur,
- transmission de la caractéristique de sécurité et de l'identification de support de données à une mémoire de données,
- enchaînement de la caractéristique de sécurité avec l'identification de support de données,
- lecture par contact au moins de données à caractère personnel d'une seconde carte de données de manière à ce que, avant un accès aux données à caractère personnel, l'identification de support de données du transpondeur est lue sans contact et qu'à l'aide de l'information de support de données de la mémoire de données, au moins la caractéristique de sécurité enchaînée avec l'information de support de données soit lue, la caractéristique de sécurité déterminant une autorisation de lecture des données à caractère personnel de la seconde carte de données.

2. Procédé selon la revendication 1, **caractérisé en ce que** le transpondeur lit de manière sans contact une clé pour le chiffrement de la communication avec la mémoire de données.

3. Procédé selon la revendication 2, **caractérisé en ce que** la transmission de la caractéristique de sécurité et de l'identification de support de données à la mémoire de données et/ou la lecture des données à caractère personnel est chiffrée à l'aide de la clé.

4. Procédé selon l'une des revendications précédentes, **caractérisé en ce que**, ensemble avec la lecture sans contact de l'information de support de données, un numéro d'identification personnel est demandé, et **en ce que** le numéro d'identification personnel détermine une autorisation de lecture de la seconde carte de données.

5. Procédé selon l'une des revendications précédentes, **caractérisé en ce qu'**au moins une identification de personne du premier support de données est lue par contact, **en ce que** l'identification de personne lue est transmise à la mémoire de données, et **en ce que** l'identification de personne est enchaînée avec l'identification de support de données.

6. Procédé selon la revendication 5, **caractérisé en ce qu'**un accès à la seconde carte de données est enregistré ensemble avec l'identification de personne.

7. Procédé selon la revendication 5, **caractérisé en ce que** l'identification de personne présente au moins une signature électronique.

8. Procédé selon l'une des revendications précédentes, **caractérisé en ce que** la caractéristique de sécurité présente au moins un certificat électronique.

9. Procédé selon l'une des revendications précédentes, **caractérisé en ce que** l'enchaînement de la caractéristique de sécurité avec l'identification de support de données est séparé en fonction
A) d'un intervalle de temps, ou
B) d'une accessibilité spatiale du transpondeur.

10. Procédé selon l'une des revendications précédentes, **caractérisé en ce que** la première carte de données est une carte de professionnel de santé et **en ce que** la seconde carte de données est une carte de santé électronique.

11. Procédé selon l'une des revendications précédentes, **caractérisé en ce que** la mémoire de données est disposée de manière centrale.

12. Procédé selon l'une des revendications précédentes, **caractérisé en ce que** les données à caractère personnel lues sont représentées sur un ordinateur.

13. Système pour l'accès sécurisé à des données à caractère personnel, comprenant :
- une première carte de données lisible par contact gardant en mémoire une caractéristique de sécurité permettant un accès à des données à caractère personnel,
- un transpondeur lisible sans contact, gardant en mémoire une identification de support de données, et
- une seconde carte de données à caractère personnel, lisible par contact, gardant en mémoire des données,
- un premier terminal étudié pour la lecture par contact au moins de la caractéristique de sécurité de la première carte de données, et pour la lecture sans contact de l'identification de support de données du transpondeur,
- le terminal étant en liaison avec une mémoire de données pour la transmission de la caractéristique de sécurité et de l'identification de support de données,
- la mémoire de données étant étudiée pour enchaîner la caractéristique de sécurité avec l'identification de support de données,
- un second terminal étudié pour la lecture par contact au moins de données à caractère personnel d'une seconde carte de données et pour la lecture sans contact du transpondeur de manière à ce que, avant un accès aux données à caractère personnel, le terminal lit sans contact l'identification de support de données du transpondeur et lit, à l'aide de l'information de support de données de la mémoire de données, au moins la caractéristique de sécurité enchaînée avec l'information de support de données,
- le terminal étant étudié de manière à ce que les données à caractère personnel soient lues seulement s'il y a une autorisation de lecture des données à caractère personnel de la seconde carte de données grâce à la caractéristique de sécurité.
